Europäisches Patentamt

European Patent Office

Office européen des brevets

(11) Publication number: **0 347 167**
**A2**

## EUROPEAN PATENT APPLICATION

(21) Application number: 89305956.8

(22) Date of filing: 13.06.89

(51) Int. Cl.⁴ **H04Q 7/04 , H04B 7/26**

(30) Priority: 14.06.88 JP 146368/88
17.06.88 JP 149883/88

(43) Date of publication of application:
20.12.89 Bulletin 89/51

(34) Designated Contracting States:
DE FR GB SE

(71) Applicant: **KABUSHIKI KAISHA TOSHIBA**
**72, Horikawa-cho Saiwai-ku**
**Kawasaki-shi Kanagawa-ken Tokyo(JP)**

(72) Inventor: **Sato, Hiroshi c/o Intellectual**
**Property Division**
**Toshiba Corporation 1-1- Shibaura, 1-chome**
**Minato-ku Tokyo(JP)**
Inventor: **Kita, Katsuhiko c/o Intellect.**
**Property Division**
**Toshiba Corporation 1-1- Shibaura, 1-chome**
**Minato-ku Tokyo(JP)**
Inventor: **Iishii, Takaaki c/o Intellect. Property**
**Division**
**Toshiba Corporation 1-1- Shibaura, 1-chome**
**Minato-ku Tokyo(JP)**

(74) Representative: **BATCHELLOR, KIRK & EYLES**
**2 Pear Tree Court Farringdon Road**
**London EC1R 0DS(GB)**

(54) Radio telecommunication apparatus.

(57) A radio telecommunication apparatus to be used in a radio telecommunication system wherein one or more base units broadcast radio signals over a plurality of radio channels. The apparatus detects the availability of one or more radio channels and provides an indication representing operability of the apparatus in response to a change of the detected availability. The apparatus also provides an indication to a user in response to his request input or a call origination operation. Furthermore, the apparatus may provide an indication of which system is serving the apparatus in response to a received system identification signal.

Fig.1

## Radio Telecommunication Apparatus

This invention relates to the field or radio telecommunication apparatus such as mobile telephone and, more particularly, to a radio telecommunication apparatus used in a radio telecommunication system wherein at least one base unit serves a predetermined geographical area.

In cellular radio telecommunication systems, a large geographical area is covered and served by breaking the area into a plurality of small zones or cells. A mobile telephone is capable of establishing a communication link with another party within the combined plurality of small zones, i.e. a service area. However, a mobile telephone may not be served by the system outside the service area. Accordingly, it is necessary for a user of the apparatus to be informed of whether the mobile telephone is within a service area and therefore capable of being served by the system. It is also preferable to know which service area the mobile telephone is within.

In a prior art mobile telephone apparatus, when the mobile telephone apparatus is not capable of being served by the system, a visual display of "NO-SVC," or the like is made on a display unit on a handset.

### BACKGROUND OF THE INVENTION

According to prior art mobile telephones, a user has to look at the display unit to know whether or not the mobile telephone is capable of being served by the system. However, in the case of a radio telephone apparatus such as an automobile telephone, it is very dangerous for a user who is driving an automobile to keep watching the display.

Also, prior art mobile telephones do not inform a user as to which service area is going to serve or is serving the apparatus. Therefore, when a user desires to make a call, if the user is not sure which service area is serving the apparatus, the user may dial an area code when not necessary or may omit one where it is necessary. In either case, the user must redial, which is time consuming and annoying. Moreover, even if the user knows where he is geographically, he may be unaware that the apparatus may actually be served by a neighboring service area due to radio interference. For example, a user may be in the northern part of the District of Columbia but actually be served by a system located in Maryland.

### SUMMARY OF THE INVENTION

Accordingly, it is an object of the present invention to provide an improved radio telecommunication apparatus wherein a user of the apparatus is audibly informed when the apparatus becomes capable of being served by a system or when the apparatus becomes not capable of being served by a system.

It is a further object of the present invention to provide an improved radio telecommunication apparatus wherein a user of the apparatus is informed of which system is serving the apparatus and thereby the user becomes aware that the apparatus is served by the system.

It is still a further object of the present invention to provide an improved radio telecommunication apparatus wherein a user is notified of whether the apparatus is capable of being served by a system when the user desires to make a call or perform a predetermined key operation.

According to this invention, a radio telephone apparatus detects the availability of one or more radio channels and generates an audible indication such as a sound or voice message in response to a change of the availability of the radio channels. Accordingly, when the apparatus is not capable of being served, for example, when it leaves a service area or owing to radio interference, a user of the apparatus may be informed of the non-operability of the apparatus by the sounds. Conversely, when the apparatus is getting operable by entering a service area or by being released from radio interference, a user of the apparatus may be informed of the operability of the apparatus by the sounds. Therefore, a user of an automobile telephone may constantly be informed as to the operability of the apparatus while constantly engaging in driving.

Also, according to one embodiment of this invention, when a user of the apparatus desires to perform a predetermined key operation or make a call, an audible indication indicative of the operability of the apparatus is generated from a speaker.

Furthermore, when the apparatus is operable or becomes operable, sounds corresponding to a radio telecommunication system serving the apparatus are generated in response to a system identification number transmitted from the system.

### BRIEF DESCRIPTION OF THE DRAWINGS

Figure 1 is a block diagram of a mobile telephone in accordance with an embodiment of the present invention.

Figure 2 is a block diagram of audio control unit 106 shown in Figure 1.

Figure 3 is a state transition diagram for explaining an operation of the mobile telephone shown in Figure 1.

Figure 4 is a flow chart for explaining an initial radio channel connection operation shown in Figure 3.

Figure 5 is a flow chart for explaining a paging radio channel connection operation shown in Figure 3.

## DETAILED DESCRIPTION OF THE PREFERRED EMBODIMENT

A preferred embodiment of the present invention applied in a radio telephone will be described with reference to the accompanying drawings. The present invention may likewise be employed in other kinds of radio telecommunication apparatus used in a cellular radio system.

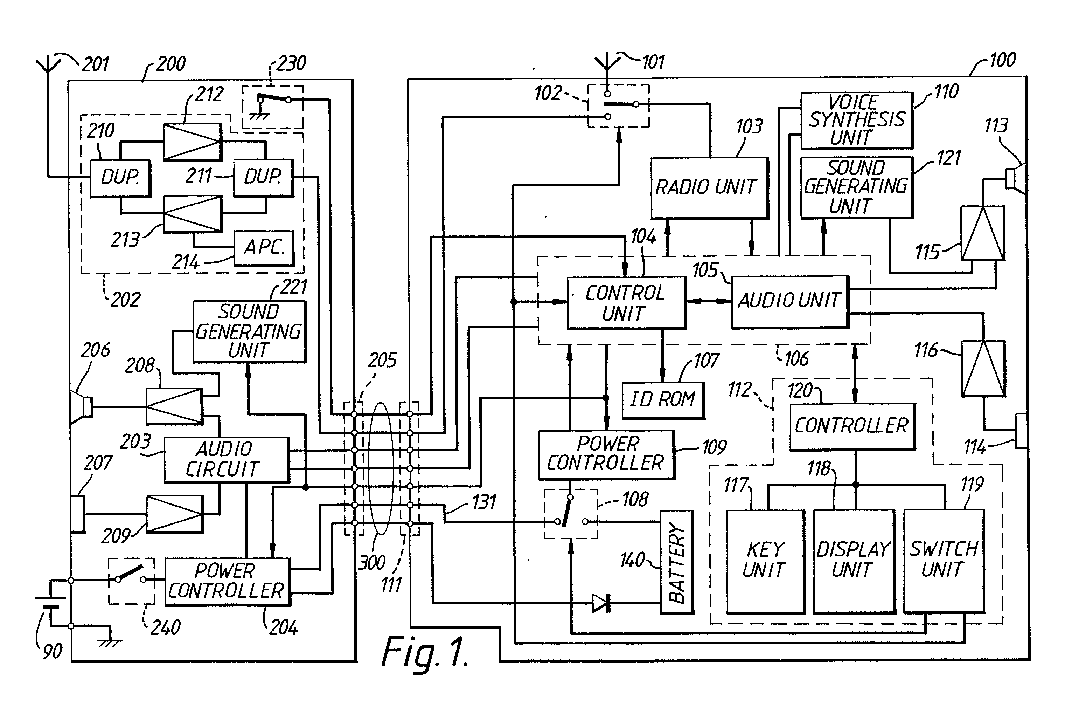

Figure 1 is a block diagram showing an arrangement of the mobile telephone according to the preferred embodiment. The mobile telephone of this embodiment is an improved cellular radio telephone wherein a portable unit 100 is available by itself or attached with an adaptor unit 200. However, the invention is not so limited. The invention may be used in other related applications as will be apparent to one of ordinary skill in the art.

Portable unit 100 comprises an antenna 101, switch circuits 102 and 108, a radio unit 103 for establishing radio channels with a base station (not shown), an audio control unit 106 including a control unit 104 and an audio unit 105 for controlling the overall operation of the apparatus, an ID ROM 107 for storing a mobile identification number, a power controller 109 for supplying power from a rechargeable battery 140 or adaptor unit 200, a connector 111 for connecting portable unit 100 with adaptor unit 100, an operation unit 112, a speaker 113, a microphone 114, an output amplifier 115, an input amplifier 116, a sound generating unit 121 for producing a prescribed first audio signal or second audio signal, and a voice synthesis unit 110 for synthesizing voice messages.

Operation unit 112 comprises a key unit 117 for inputting key inputs, a display unit 118 for displaying characters, a switch unit 119, a controller 120 for controlling operations of key unit 117, display unit 118 and switch unit 119. Controller 120 controls display unit 112 in accordance with control signals sent from audio control unit 106 and sends control signals input from key unit 117 to audio control unit 106. Display unit 118 comprises a liquid crystal display device and a display driver. The display driver drives the liquid crystal display device in accordance with the control of controller 120 to effect the prescribed display. Key unit 117 comprises a key pad of number keys "0" to "9" and function keys (e.g., "#", "*", "SEND", "FCN", etc.). When a key pad is depressed, the depression is detected by controller 120. Switch unit 119 is provided with a hook switch and a changeover switch and detects the ON or OFF hook state of portable unit 100 by means of the hook switch. Hook switch 230 could also be provided on adaptor unit 200. Upon an activation of the changeover switch, connections in switch circuit 102 and 108 are changed, all of which may be implemented as shown and described in U.S. Patent Application Serial No. 248,921 filed 21 Sept 1988 entitled "Radio Telephone Apparatus" (incorporated herein by reference thereto).

Output amplifier 115 amplifies the sound signals from sound generating unit 121 or audio unit 105 of portable unit 100 and outputs the amplified sound signal. Input amplifier 116 amplifies the sound signals applied from microphone 114. The amplified signals are provided to audio unit 105 of portable unit 100.

Adaptor unit 200 comprises an antenna 201 mounted on the vehicle, a booster unit 202, an audio circuit 203, a power controller 204, a connector 205, a loudspeaker 206, a microphone 207, an output amplifier 208, an input amplifier 209, sound generating unit 221, a hook switch 230, and a power switch 240. Booster unit 202 comprises duplexers 210 and 211, a reception amplifier 212, a transmission power amplifier 213, and an automatic power control circuit (APC) 214. A car battery 90 or other suitable source is connected to power controller 204 via power switch 240. Portable unit 100 can be connected to adaptor unit 200 via a coaxial cable 300.

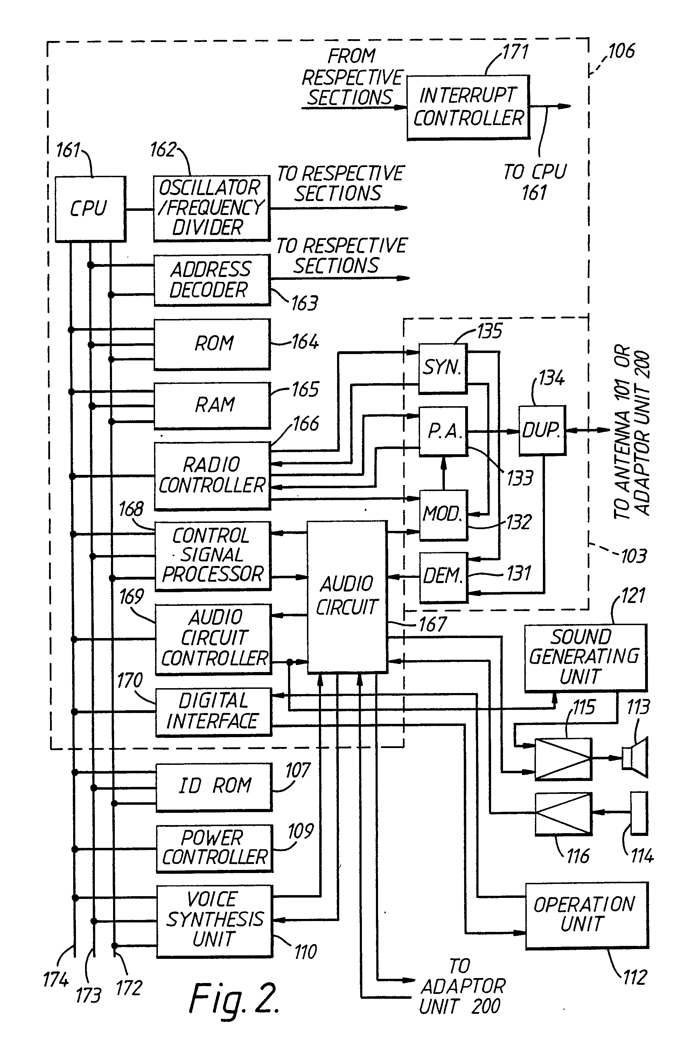

Figure 2 is a block diagram showing a detailed arrangement of audio control unit 106 and radio unit 103 shown in Figure 1.

Referring to Figure 2, radio unit 103 comprises a demodulator 131, a modulator 132, a power amplifier 133, a duplexer 134, and a synthesizer 135. Demodulator 131 demodulates a radio signal received from a base station through radio channels, antenna 101 or 201. It should be noted that this signal includes audible sound signals and control signals. Modulator 132 modulates the audio and control signals and the like from audio control unit 106 and generates transmission signals.

Power amplifier 133 amplifies the transmission signals from modulator 132. The amplification of power amplifier 133 is variable, e.g., 8-step variable. Duplexer 134 sends the signals received over radio channels to demodulator 131, and the signals from modulator 132 and power amplifier 133, to antenna. Synthesizer 135 comprises a channel selection local oscillator and specifies a frequency from which signals are demodulated by demodulator 131 and a frequency to which signals are modulated by modulator 132.

Audio control unit 106 comprises a CPU 161, an oscillator/frequency divider 162, an address decoder 163, a ROM 164, a RAM 165 including a SID register for storing system identification number, a radio controller 166, an audio circuit 167, a control signal processor 168, an audio circuit controller 169, a digital interface 170, and an interrupt controller 171. Reference numeral 172 denotes a data bus; 173, an address bus; and 174, a control bus. CPU 161 controls the operations of audio control unit 106. Oscillator/frequency divider 162 supplies clock signals to CPU 161 and divides the clock signals so as to supply appropriately frequency-divided pulses as timing pulses to each section of the mobile telephone apparatus requiring them. Address decoder 163 outputs operational signals to each section in response to instruction signals from CPU 161. ROM 164 stores various programs required for operations by CPU 161. RAM 165 stores various kinds of data during processing of CPU 161. For example, a plurality of voice message data are stored, each of which corresponds to a system identification number provided by a system serving the apparatus. Radio controller 166 controls radio section 103 in response to an instruction from CPU 161. For example, radio controller 166 sends signals indicative of available frequencies to the synthesizer 135, signals indicative of an amplification level to power amplifier 133, and signals indicative of modulation parameters to modulator 131. Radio controller 166 receives a step-out signal from synthesizer 135 and output power detection signals from power amplifier 133 and supplies them to CPU 161, thereby preventing operation errors. Audio circuit 167 extracts control signals and audio signals from the received signals demodulated by demodulator 132 and supplies the control signals to control signal processor 168 and the audio signals to speaker 113. Audio circuit 167 also supplies the control signals from control signal processor 168 and audio signals from microphone 114 to modulator 132 and supplies audio signals from voice synthesis circuit 110 to speaker 113. It should be noted that audio circuit 167 also arranges the signal form of the control signal to be sent to control signal processor 168 in a particular wave format and filters the control signal to be supplied to modulator 132. Control signal processor 168 acquires bit and frame synchronization with the control signal from audio circuit 167. Maintaining the acquired synchronization, control signal processor 168 converts serial control signals received from a base station into parallel signals and converts parallel control data signals to be transmitted to a base station into serial signals. The control signals are sent to and from the base station via audio circuit 167. Audio circuit controller 169 controls audio circuit 167. For example, under the control of audio circuit controller 169, audio circuit 167 selectively applies the received signals from demodulator 132 to control signal processor 168 or speaker 113 and selectively receives the signals from control signal processor 168, voice synthesis circuit 110 or microphone 114. Digital interface 170 interfaces data communication between radio unit 300 and operation unit 112. Interrupt controller 171 interrupts CPU 161 in response to an interrupt signal from each component.

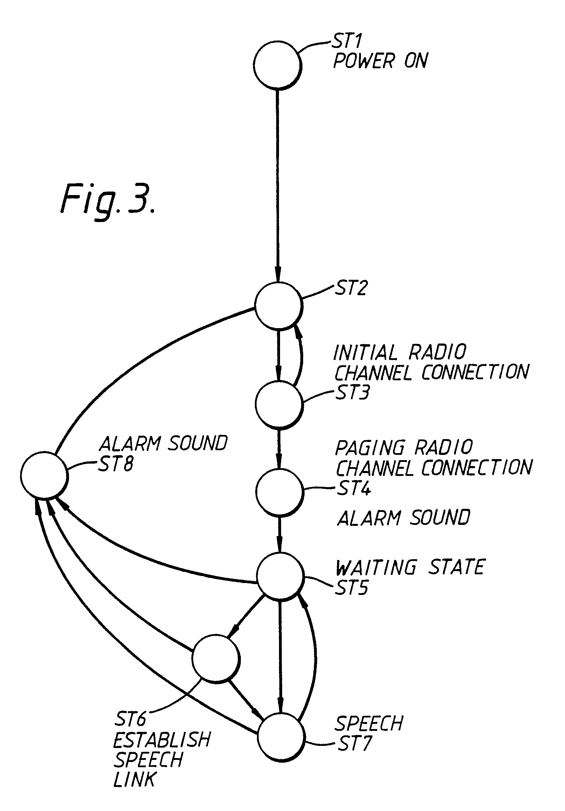

Next the operation of the mobile telephone will be described with reference to a state transition diagram of Figure 3.

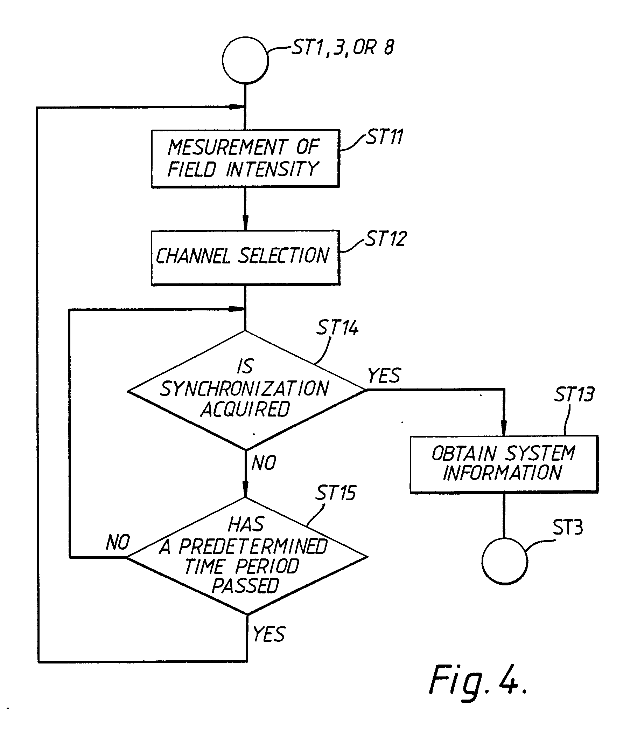

When power switch 240 is closed, each section of portable unit 100 and adaptor unit 200 is supplied power from battery (ST1). In the next state (ST2), an initialization procedure is performed. Figure 4 is a flow chart for explaining an initial radio channel connection operation in ST2 after the power supply is turned on. In response to a control signal from CPU 161, radio controller 166 selects a predetermined range of control channels to be scanned and controls the output frequency of synthesizer 135 so that the predetermined range of control channels (referred to as D channels hereinafter) is scanned in demodulator 131. The electric field intensity of signals received over each channel is measured (ST11), all of which may be implemented as shown and described in U.S. Patent Application Serial No. 248,921 (incorporated herein by reference thereto). The channel having the strongest electric field intensity is selected from the D channels and the apparatus is ready for receiving signals through the D channel having the strongest electric field intensity (ST12).

Then, under the control of CPU 161, audio circuit controller 169 controls audio circuit 167 so that the output of demodulator 131 is applied to the input of control signal processor 168 and the output of control signal processor 168 is applied to the input of modulator 132. Control signal processor 168 performs bit and frame synchronization operations on signals received over the selected D channel. If synchronization is acquired (ST14) and system information is detected within signals received over the D channel at control signal processor 168 (ST13), operation of the apparatus proceeds to ST3. The system information includes information of a range of frequency channels (referred to as P channels hereinafter) to be scanned next and a system identification number. The received system identification number represents a MTS050 covering the area where the radio telephone is located and is stored in a SID register of RAM 165.

CPU 161 controls control signal processor 168 to try to acquire synchronization until a predetermined time period has passed (ST14 and 15). If the synchronization is not acquired within the time period, operation of the apparatus returns to ST11.

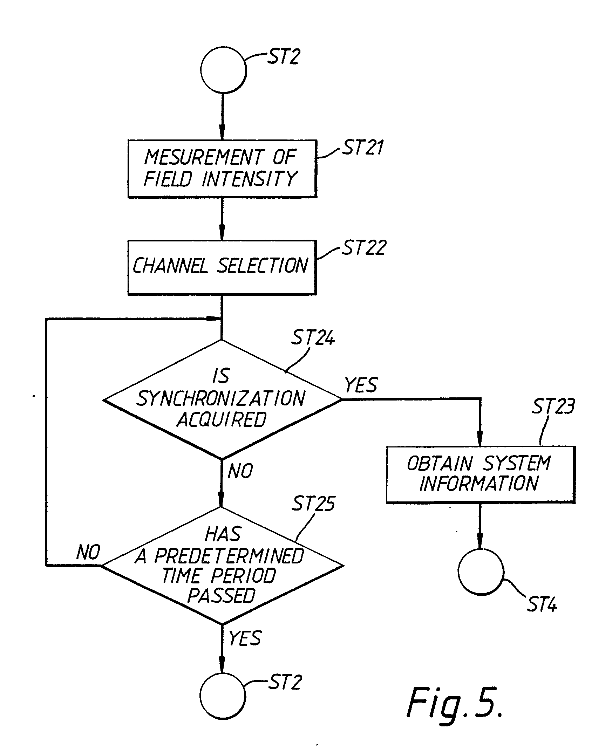

Figure 5 is a flow chart for explaining P (paging) channel connection operation in ST3 after the initialization. Responsive to a control signal from CPU 161, radio controller 166 selects a range of P channels to be scanned on the basis of the received system information and controls the output frequency of synthesizer 135 so that the P channels are scanned in demodulator 131. The electric field intensity of signals received over each channel is measured as mentioned above (ST21). The channel having the strongest electric field intensity is selected from the P channels and the apparatus is ready for receiving signals through the P channel having the strongest electric field intensity (ST22).

Then, control signal processor 168 performs a bit and frame synchronization operation on signals received over the selected P channel. If synchronization is acquired (ST24) and system information including a system identification number is detected within signals received over the P channel at control signal processor 168 (ST23), operation of the apparatus proceeds to ST4. The detected system identification number is stored in a SID register of RAM 165.

CPU 161 controls control signal processor 168 to try to acquire synchronization until a predetermined time period has passed (ST24 and ST25). If the synchronization is not acquired within the time period, operation of the apparatus proceeds to ST2.

Returning to Figure 3, upon entering ST4, CPU 161 activates sound generating unit 121 via audio circuit controller 169 so that a first alarm tone is generated from sound generating unit 121 and output from speaker113 or 206 through output amplifier 115 or 208. CPU 161 may activate voice synthesis unit 110 so that an audible indication such as a predetermined voice message indicating that the apparatus is entering a service area, for example, "NOW ENTERING A SERVICE AREA" is generated from voice synthesis unit 110. The message is output from speaker 113 or 206 through audio circuit 167 and output amplifier 115.

CPU 161 may retrieve voice message data corresponding to a system identification number stored in the SID register of RAM 165 from RAM 165 and provides the data to voice synthesis unit 110. Responsive to the data, voice synthesis unit 110 generates an audible indication such as a predetermined voice message with a voice message corresponding to the received system identification number, for example, "NOW ENTERING WASHINGTON SERVICE AREA." The message is output from speaker 113 or 206. Also, the message may be displayed on display unit 118 under control of control unit 104 and controller 120.

After the alarm sounds are generated, the operation of the apparatus proceeds to ST5. In ST5, the apparatus waits for an incoming call or a request for a call origination by a user while checking whether the electric field intensity of received signals is below a predetermined level or whether signal reception is out of synchronization. If electric field intensity of received signals decreases below a predetermined level or signal reception is out of synchronization, the operation of the apparatus proceeds to ST8.

When a request for a call origination is made by a user, measurement of electric field intensity of signals received through dedicated (selected) channels and acquisition of synchronization with the signals received through the dedicated channel having the strongest electric field intensity is likewise performed to establish an access channel (ST6). At this event, if synchronization with received signals is not acquired within a predetermined amount of time and/or a predetermined number of tries, the operation of the apparatus proceeds to ST8. If synchronization is acquired, the operation of the apparatus proceeds to ST7.

In ST7, over a speech radio channel dedicated by the system, a speech communication link is established while electric field intensity of signals received over the channel is being measured. Even after a speech communication link is established, if electric field intensity of received signals decreases below a predetermined level, the operation of the apparatus proceeds to ST8.

In ST8, CPU 161 activates sound generating unit 121 via audio circuit controller 169 so that a second alarm tone is generated from sound generating unit 121. The alarm tone is output from speaker 113 or 206 through output amplifier 115 or 208. CPU 161 may activate voice synthesis unit 110 so that a predetermined voice message indicating that the apparatus is leaving a service area, for example, "OUT OF SERVICE AREA" is generated from voice synthesis unit 110 and output from speaker 113 or 206 through audio circuit 167 and output amplifier 115 or 208. Thereafter, the operation of the apparatus proceeds to ST2.

When a user of the apparatus depresses predetermined keys, for example, "FCN", "8" on key unit 117, controller 120 detects the input and sends an interruption signal to CPU 161 via interrupt controller 171. These inputs represent a request input for an indication. A number of types requests can be made by the user in a similar manner. If the interruption signal is received by CPU 161, CPU 161 determines which operational state it is in. The interruption signal is not received by CPU 161 in ST6 and 7. When the operational state is ST1-3, or ST8, CPU 161 activates voice synthesis unit 110 so that a predetermined voice message indicating that the apparatus is not capable of being served by a service area, for example, "LEAVING SERVICE AREA" or "OUT OF SERVICE AREA" is generated from voice synthesis unit 110 and output from speaker 113 or 206 through audio circuit 167. When the operational state is ST4 or 5, CPU 161 activates voice synthesis unit 110 so that a voice message corresponding to the received system identification number, for example, "IN NEW YORK SERVICE AREA" is generated. And the message is output from speaker 113 or 208.

Likewise, when a user of the apparatus depresses "SEND" key on key unit 117 or lifts up portable unit 100 to make a call, controller 120 detects the key input or interrupt controller 171 detects the closure of hook switch 230 of adaptor unit 200 and an interruption signal is generated and sent to CPU 161 via interrupt controller 171. If the interruption signal is received by CPU 161, CPU 161 determines which operational state it is in. The interruption signal is not received by CPU 161 in ST6 and 7. When the operational state is ST1-3 or ST8, CPU 161 activates voice synthesis unit 110 so that a predetermined voice message indicating that the apparatus is not served by a service area, for example, "OUT OF SERVICE AREA" is generated from speaker 113 or 206. When the operational state is ST4 or 5, CPU 161 activates sound generating unit 121 via audio circuit controller 169 so that the second alarm tone is generated. The alarm tone is output from speaker 113 or 206. Also, CPU 161 may activate voice synthesis unit 110 so that a voice message corresponding to a system identification number is stored in the SID register of RAM 165, for example, "BALTIMORE SERVICE AREA" is generated. And the message is output from speaker 113 or 208.

According to this embodiment, a user may be accurately informed of the service area actually serving the apparatus, and thereby the user may easily determine whether a local code needs to be used or not when the user makes a call.

While the availability of a radio channel is determined by checking whether synchronization with received signals is acquired in the above mentioned embodiment, it may be determined by values of field intensity measured in ST11 of Figure 4 or ST21 of Figure 5. In these steps, if appropriate field intensity is not obtained over any scanned radio channels, the operation of the apparatus returns to ST2.

Although an embodiment applied to a mobile telephone has been described, it is apparent to those skilled in this art that the present invention may be easily applied to any kind of radio telecommunication apparatus, for example, telecommunication equipment transmitting and receiving data using radio channels. Also, any desired voice message or other type of audible indication can be used and the invention is not limited to the examples used in the specification.

## Claims

1. A radio telecommunication apparatus for use in a radio telecommunication system, wherein one or more base units broadcast radio signals over a plurality of radio channels, comprising:
selecting means for selecting at least one of the plurality of radio channels for reception of the radio signals;
receiving means responsive to said selecting means for receiving radio signals transmitted from said base station over the at least one selected radio channel;
characterised by:
detecting means coupled to said receiving means for detecting the availability of the selected radio channel; and
audible indication means coupled to said detecting means for providing an indication to a user in response to a change of the detected availability of the selected radio channel.

2. The apparatus of claim 1 wherein said audible indication means provides an indication to a user when the selected radio channel changes to a state of availability.

3. The apparatus of claim 1 wherein said audible indication means provides an indication to a user when all the selected radio channels change to a state of non-availability.

4. The apparatus of claim 1 wherein said detecting means detects whether a synchronization signal is obtained from the received signals.

5. The apparatus of claim 1 wherein said detecting means detects whether the electric field intensity of the received signals exceeds a predetermined value.

6. The apparatus of claim 1 wherein said audible indication means comprises voice synthesis means for synthesizing a predetermined voice pattern.

7. Apparatus according to any preceding claim further comprising input means for entering a service request, and wherein said audible indication means is responsive to said detecting means and said input means to provide an indication of the availability of the selected radio channels in response to the request input.

8. The apparatus of claim 7 wherein said input means comprises one or more input keys.

9. The apparatus of claim 7 further comprising a handset including a speaker and wherein said input means comprises a hook switch in cooperation with said handset and said audible indication means generates sounds via said speaker of said handset in response to a removal of said handset from said hook switch.

10. The apparatus of claim 7 wherein said input means comprises a depressable key switch and said audible indication means comprises a loudspeaker and generates sounds via said loudspeaker in response to a depression of said key switch.

11. Apparatus according to any preceding claim further comprising detecting means coupled to said receiving means for detecting the system identification signal within the received signals; and wherein said audible indication means is responsive to said detecting means to indicate the identity of the system.

12. Apparatus according to claim 6 and claim 11 wherein said voice synthesis means comprises voice data storage means for storing one or more voice data corresponding to one or more system identification signals and synthesizes a voice message in accordance with the detected system identification signal.

13. A method of providing an audible indication to a user of a radio telecommunication apparatus used in a radio telecommunication system wherein one or more base units broadcast radio signals over a plurality of radio channels, comprising the steps of:
selecting at least one of the plurality of radio channels for reception of radio signals;
receiving radio signals broadcast from said base unit over the selected radio channel;
acquiring synchronization with the received radio signals;
providing a first indication after the sychronization with the received radio signals is acquired.

14. The method of claim 13 further comprising the step of obtaining a system identification number included in the received signals and wherein the first indication is a voice sound corresponding to the obtained system identification number.

15. The method of claim 13 further comprising the step of providing a second indication in the event that the synchronization with the received radio signals is lost.

16. The method of claim 14 further comprising the steps of measuring field intensity of the received radio signals and, in the event that the measured electric field intensity does not exceed a predetermined value, providing a second indication.

17. A radio telecommunication apparatus for use in a radio telecommunication system, wherein one or more base units broadcast radio signals including a system identification signal over a plurality of radio channels, comprising:
selecting means for selecting at least one of the plurality of radio channels;
receiving means responsive to said selecting means for receiving radio signals transmitted from said base station over the at least one selected radio channel;
detecting means coupled to said receiving means for detecting the system identification signal within the received signals; and
indication means for providing an indication corresponding to the detected system identification signal.

18. The apparatus of claim 17 wherein said indication means provides the indication when the system identification signal is detected by said detecting means.

19. The apparatus of claim 17 or claim 18 further comprising means for entering an indication request and wherein said indication means provides the indication when the indication request is entered.

20. The apparatus of any of claims 17 to 19 wherein said indication means comprises display means for displaying a message corresponding to the detected system identification signal.

21. The apparatus of any of claims 17 to 20 wherein said indication means comprises voice synthesis means for synthesizing a voice message corresponding to the detected system identification signal.

Fig.1.

EP 0 347 167 A2

FROM
RESPECTIVE
SECTIONS

INTERRUPT
CONTROLLER _171_ _106_

TO CPU
161

_161_ _162_

CPU

OSCILLATOR
/FREQUENCY
DIVIDER

TO RESPECTIVE
SECTIONS

ADDRESS
DECODER

TO RESPECTIVE
SECTIONS

_163_

ROM _164_

RAM _165_

_166_

RADIO
CONTROLLER

_168_

CONTROL
SIGNAL
PROCESSOR

_169_

AUDIO
CIRCUIT
CONTROLLER

_170_

DIGITAL
INTERFACE

AUDIO
CIRCUIT

_167_

SYN. _135_

P.A.

_133_

MOD. _132_

DEM. _131_

DUP. _134_

TO ANTENNA 101 OR
ADAPTOR UNIT 200

_103_

SOUND
GENERATING
UNIT _121_

_115_ _113_

_116_ _114_

ID ROM _107_

POWER
CONTROLLER _109_

VOICE
SYNTHESIS
UNIT _110_

OPERATION
UNIT

_112_

TO
ADAPTOR
UNIT 200

_174_ _173_ _172_

*Fig. 2.*

Fig.3.

ST1
POWER ON

ST2

INITIAL RADIO
CHANNEL CONNECTION
ST3

PAGING RADIO
CHANNEL CONNECTION
ST4

ALARM SOUND

ALARM SOUND
ST8

WAITING STATE
ST5

ST6
ESTABLISH
SPEECH
LINK

SPEECH
ST7

Fig. 4.

ST2

MESUREMENT OF
FIELD INTENSITY — ST21

CHANNEL SELECTION — ST22

ST24

IS
SYNCHRONIZATION
ACQUIRED — YES

ST23

OBTAIN SYSTEM
INFORMATION

NO

ST25

HAS
A PREDETERMINED
TIME PERIOD
PASSED

NO

YES

ST2

ST4

*Fig.5.*